# EUROPEAN PATENT APPLICATION

(11) **EP 2 037 231 A1**
(43) Date of publication of application: **18.03.2009**
(21) Application number: 08104250.9
(22) Date of filing: 04.06.2008
(51) Int. Cl.: G01F 1/66, G01F 15/14

(54) **Ultrasonic flow measurement device**

(30) Priority: 11.09.2007 EP 07116098
(71) Applicant: KAMSTRUP A/S, 8660 Skanderborg (DK)
(72) Inventor: Drachmann, Jens, 8260, Viby J (DK); Borring, Peter Nordlund, 7100, Vejle (DK)
(74) Representative: Plougmann & Vingtoft A/S

(57) **Abstract**

In order to provide an improved method of manufacturing a housing of an ultrasonic fluid flow measurement device which is easily manufactured, assembled and installed there is, in accordance with an aspect of the present invention, disclosed a housing with a first substantially plane area (104) and a second substantially plane area (106) of the housing suited for acoustically coupling a first and a second ultrasound transducer, and a flow inlet centre axis (112) and a flow outlet centre axis (114) are provided in a flow direction of the housing on a common straight centre axis (116) of the monolithic and injection moulded housing (102) where a whole of the inside surface (202) of the housing (102) can be seen from the flow inlet (122) or from the flow outlet (124) or from the flow inlet (122) in combination with a view (206) from the flow outlet (124).

## Description

### FIELD OF THE INVENTION

The invention relates to a housing of an ultrasonic fluid flow measurement device and among others to a method of manufacturing the housing.

### BACKGROUND OF THE INVENTION

Ultrasound flow meters for ultrasonic measurement of fluid flow are typically used for measuring the flow of gases or liquids which flows through a pipe system, and in particular liquids such as water.

In some applications the amount of fluid flow measured by the flow meter is used to charge a customer using the fluid. In these and also in other applications the accuracy and consistency of the measuring results needs to be optimal and in most applications among others needs to be certified for their accuracy and consistency. These needs must be fulfilled while also considering and preferably optimizing factors such as the production, assembling and installation cost of the fluid flow measurement device.

The measurement of fluid flow may follow from generating and receiving ultrasonic signals by each of two ultrasound transducers as described in the following. The ultrasonic signals may be directed towards and reflected by ultrasound reflectors within the housing prior to being received at an ultrasound transducer. The ultrasonic signals may also be transmitted without being reflected by dedicated ultrasound reflectors. In a typical measurement of fluid flow, the ultrasonic signals are simultaneously emitted from the two ultrasound transducers. Signals propagating upstream propagate faster than signals propagating downstream, and the flow rate can be determined by measuring difference in arrival time of the emitted signals at the other transducer. The determination of the flow rate, as well as outputting the flow rate may be done by an analogue or digital unit electrically connected to the ultrasound transducers.

Flow meters known to the present inventor fail to some extent to provide one or more of these needs possibly while also considering one or more of the described or other factors.

The inventor of the present invention has therefore appreciated that an improved housing of an ultrasound measurement device and an improved method of manufacturing the housing is of benefit, and has in consequence devised the present invention.

### SUMMARY OF THE INVENTION

It may be seen as an object of the present invention to provide an improved method of manufacturing a housing of an ultrasonic fluid flow measurement device and an improved housing of an ultrasonic fluid flow measurement device. Preferably, the invention alleviates, mitigates or eliminates one or more of the above or other disadvantages singly or in any combination. Particularly it may be seen as an object of the invention to provide a housing and a method of producing the housing which provides fluid flow measurement devices which all gives the same and consistent measurement results while still being affordable to produce and/or assemble and/or install and/or maintain.

Accordingly there is, in a first aspect, provided a housing of an ultrasonic flow measurement device for ultrasonic measurement of fluid flow, the housing comprising
- a first substantially plane area and a second substantially plane area of the housing suited for acoustically coupling a first and a second ultrasound transducer, and wherein
- a flow inlet centre axis and a flow outlet centre axis are provided in a flow direction of the housing on a common straight centre axis of the housing,
- the housing is provided in one monolithic piece and in one or more synthetic materials by injection moulding, and
- a whole of the inside surface of the housing can be seen from the flow inlet or from the flow outlet or from the flow inlet in combination with a view from the flow outlet.
   Thus an improved housing of an ultrasonic fluid flow measurement device is provided. The improvement may possibly lie in that the flow inlet centre axis and the flow outlet centre axis are provided in a flow direction of the housing on a common straight centre axis of the housing, while the housing is provided in one monolithic piece and in one or more synthetic materials by injection moulding, and while a whole of the inside surface of the housing can be seen from the flow inlet or from the flow outlet or from the flow inlet in combination with a view from the flow outlet. A housing with these features will be easy to install in that the flow inlet centre axis and the flow outlet centre axis are provided in a flow direction of the housing on a common straight centre axis of the housing while still being affordable and non-complicated to produce with consistent dimensions among others in that the housing is provided in one monolithic piece and in one or more synthetic materials by injection moulding and a whole of the inside surface of the housing can be seen from the flow inlet or from the flow outlet or from the flow inlet in combination with a view from the flow outlet.
   The first substantially plane area and the second substantially plane area of the housing suited for acoustically coupling a first and a second ultrasound transducer may be plane on at least one of an inside or an outside of the housing. Preferably the areas are plane on both an inside and an outside of the housing. Providing a plane area or surface on the side to which the ultrasound is attached to have the possible advantage of an easier attachment of a relative simple and flat ultrasound transducer. Providing a plane area or surface on the opposite side of the material part to which the ultrasound is attached to have the possible advantage of providing a plane ultrasound wave evolving from the plane area or surface.
   Providing the housing with the described features and of which the whole of the inside surface of the housing also can be seen from the flow inlet or from the flow outlet or from the flow inlet in combination with a view from the flow outlet provides a housing which can easily be manufactured with consistent dimensions. This is among others due to that possibly at least only one or more simple inner injection moulding form tools are needed for manufacturing the housing. Another possible reason that the housing can easily be manufactured with consistent dimensions may be that the described housing may in a simple manner be detached from the one or more simple inner injection moulding form tools. This is due to the whole of housing inside surface can be seen from the flow inlet or from the flow outlet or from the flow inlet in combination with a view from the flow outlet, and is therefore only provided with slip angles that are zero or positive measured relative to one or both ends of the housing.
   When the first and the second substantially plane area are positioned so that a line from a centre of the first substantially plane area to a centre of the second substantially plane area is substantially parallel with the flow direction a possible advantage is that electrically coupling of ultrasound transducers to be acoustically coupled to the first substantially plane area to a centre of the second substantially plane area are easily provided, e.g. compared to providing the ultrasound transducers on opposite sides of the housing. Such a solution may in some embodiments have an advantage when further combined with a housing in which ultrasound is reflected one or more times prior to receiving the ultrasound at another ultrasound transducer.
   When the first and the second substantially plane area are plane in a direction substantially parallel with the flow direction, a housing is provided where a whole of the inside surface is still able to be viewed from the inlet and/or the outlet side while still providing excellent measurement results - possibly with the use of ultrasound reflectors. Accordingly the first and the second substantially plane area may be arranged in a manner so as to necessitate reflection of ultrasound within the housing in order to send and/or receive ultrasound between two ultrasound transducers.
   When any cross-sections of the housing transverse to the flow direction shows an inside surface of the housing which is unchanged and uniform at least for any cross-sections in a part of the housing between a first plane inside surface of the first substantially plane area and a second plane inside surface of the second substantially plane area an embodiment of the invention is provided which may enhance the easiness of manufacturing the housing while also providing consistent and precise measurements.
   When the inside surface is unchanged and uniform also on an inside surface of the first substantially plane area and the second substantially plane area or even in the complete length of the housing, possible advantages are that further easiness of manufacturing the housing and further consistency and preciseness of measurements may be provided.
   In accordance with a second aspect of the invention there is provided a method of manufacturing a housing of an ultrasonic fluid flow measurement device, the device comprising
- a first substantially plane area and a second substantially plane area of the housing suited for acoustically coupling a first and a second ultrasound transducer,
- the first and the second substantially plane area being positioned so that a line from a centre of the first substantially plane area to a centre of the second substantially plane area is substantially parallel with a flow direction, and
- a flow inlet centre axis and a flow outlet centre axis are provided in a flow direction of the housing on a common straight centre axis of the housing,
- the housing is provided in one monolithic piece and in one or more synthetic materials, and said method comprises
- providing one or more substantially solid inner form injection moulding tools,
- surrounding the one or more inner form tools by outer form injection moulding tools adapted to form an outer surface of the housing,
- the one or more substantially solid inner form injection moulding tools and the outer form injection moulding tools being provided with dimensions so that a whole of the inside surface of the housing can be seen from a flow inlet or from a flow outlet of the housing or from the flow inlet in combination with a view from the flow outlet of the housing,
- moulding the housing in one or more synthetic materials injected between the one or more inner form tools and the outer form tools.

Thus an improved method of manufacturing a housing of an ultrasonic fluid flow measurement device is provided. Herein substantially solid means that the inner form tool may be provided with cooling channels or the alike but that it does not comprise any linkage or the alike for providing parts of the tool which can be moved in and out of the surface of an inner form tool body. Injection moulding a housing with the other described features with such one or more substantially solid inner form tools provides a manufacturing method which is easily handable due to the non-exiting linkage or moveable parts in the inner form tools and which also provides decreased cost for producing and maintaining the one or more inner form tools. This is also due to that a housing of which the complete inside surface can be seen from one or more ends of the housing is provided with slip angles that are zero or positive measured from one or both ends of the housing and hereby the housing is easily detached from the one or more inner form tools.

When providing the single substantially solid inner form injection moulding tool and the outer form injection moulding tools with dimensions so that a whole of the inside surface of the housing can be seen from a flow inlet or from a flow outlet of the housing there is only need for one single substantially solid inner form injection moulding tool, which has the possible advantage of an even simpler injection moulding tool, method and housing.

In case threads are provided in flange ends of the housing the complete inner surface of the housing can be seen form one or both ends of the housing - though except for parts of the surface where the threads is having their negative slip angles. Possibly such threads may still be provided in a simple way by rotating the inner form tools out of the housing following moulding of the housing. When providing such threads it is foreseen that the inner form tools must be rotatable around a centre axis.

In general by writing that 'it is an advantage' by the present invention and referring to an advantage, it must be understood that this advantage may be seen as a possible advantage provided by the invention, but it may also be understood that the invention is particularly, but not exclusively, advantageous for obtaining the described advantage.

In general the various aspects and advantages of the invention may be combined and coupled in any way possible within the scope of the invention. These and other aspects, features and/or advantages of the invention will be apparent from and elucidated with reference to the embodiments described hereinafter.

### BRIEF DESCRIPTION OF THE DRAWINGS

Embodiments of the invention will be described, by way of example only, with reference to the drawings, in which
FIG. 1 shows a side view and a top view of a housing of an ultrasonic fluid flow measurement device,
FIG. 2 shows a perspective 3D view of the housing of the ultrasonic fluid flow measurement device,
FIG. 3 shows a view of cross-section A-A indicated in FIG. 1,
FIG. 4 shows a view of cross-section B-B indicated in FIG. 1, and
FIG. 5 shows two inner form injection moulding tools.

### DESCRIPTION OF EMBODIMENTS

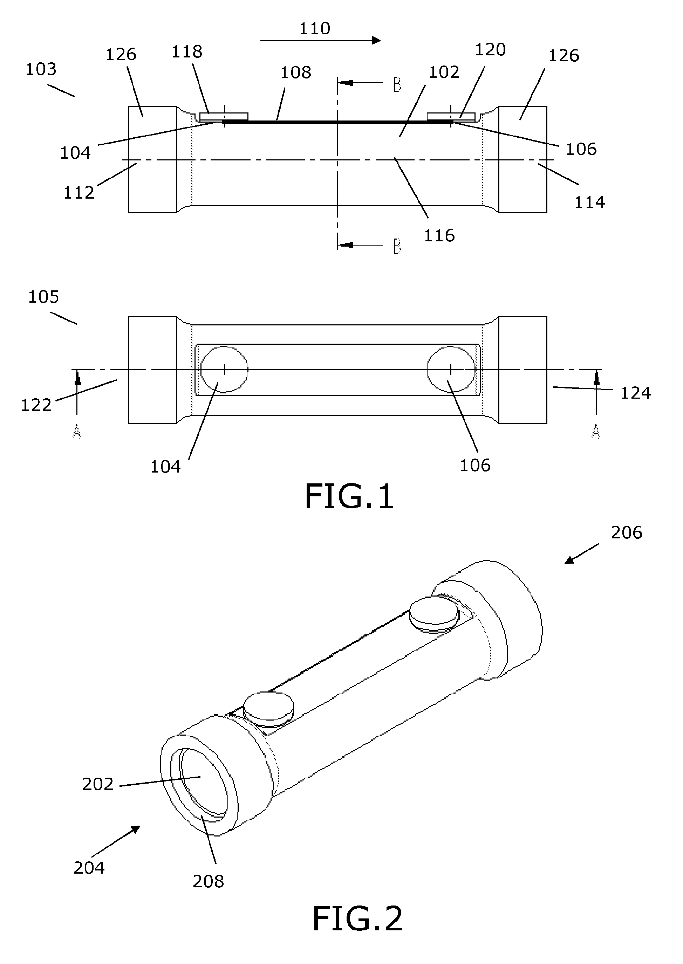

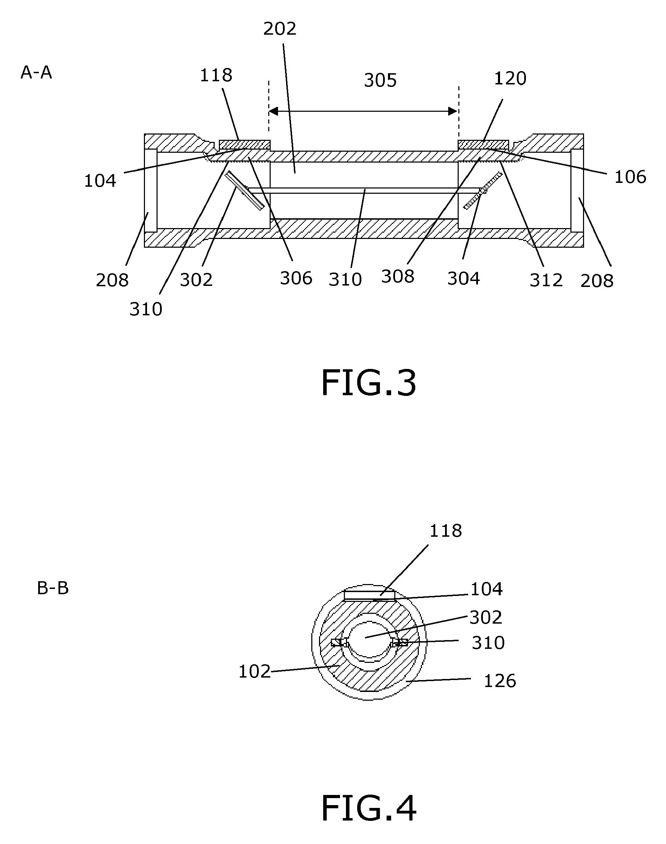

An embodiment of the invention is illustrated in FIG 1 in a side view 103 and a top view 105. A cross-section A-A is indicated along a centre plane in the top view 105 along a flow direction 110. The cross-section A-A is shown in figure 3. A cross-section B-B perpendicular to the flow direction is indicated in the side view 103. FIG. 1 shows a housing 102 of an ultrasonic fluid flow measurement device. The figure shows a pipe formed housing with a fluid flow inlet 122 and a fluid flow outlet 124. The housing is provided for fluid tight connection in both ends with a fluid flow piping system which is not shown.

The figure shows a first substantially plane area 104 and a second substantially plane area 106 of the housing suited for acoustically coupling a first and a second ultrasound transducer 118, 120. The first substantially plane area 104 and the second substantially plane area 106 are in this embodiment positioned directly opposite to a surface of the ultrasound transducers 118, 120. It can be seen that the first and the second substantially plane area are positioned so that a line 108 from a centre of the first substantially plane area to a centre of the second substantially plane area is substantially parallel with the flow direction 110 from left to right.

The housing has flow inlet 122 on the left side of the housing and a flow outlet 124 on the right. Furthermore it follows that a flow inlet centre axis 112 and a flow outlet centre axis 114 are positioned in the flow direction 110 of the housing on a common straight centre axis 116 of the housing 102. The housing 102 is provided in one monolithic piece and in one or more synthetic materials by injection moulding. The material of the housing may alternatively or additionally be or include a fibre reinforced polymer, such as a glass-fibre reinforced polymer.

FIG. 2 is a perspective 3D view of the housing of the ultrasonic fluid flow measurement device shown in figure 1. FIG. 2 shows a small surface portion of the inside surface 202 of the housing. On the figure a view 204 from the flow inlet 122 and a view 206 from the flow outlet 124 are shown.

FIG. 3 shows the A-A cross-section indicated in figure 1. FIG. 3 shows the A-A cross-section as the cross-section would look when transducers 118, 120 and reflectors 302, 304 and reflector holding means 310 are present. It follows from FIG. 3 that the complete of the inside surface 202, possibly except for any possible threads 208 in flange ends 126 of the housing, can be seen from the inlet view in combination with the outlet view shown in figure 2. In that FIG. 3 is a cross-section through a middle of the housing the figure only shows half of the complete inside surface. In that the housing is symmetric around section A-A it follows that the total inside surface, possibly except from any threads, can be seen from the inlet view 202 and the outlet view 204 shown in figure 2. When viewing the inside surface, a first reflector 302 and a second reflector and any reflector holding means 310 must be neglected in the one or more views.

From FIG. 3, possibly seen in combination with figure 1, it follows that the first and the second substantially plane areas 104, 106 are plane in a direction substantially parallel with the flow direction 110. In other words the surface areas 104, 106, and hereby the transducers 118, 120, are positioned with an angle of either 0° or 180° relative to the flow direction 110. Hereby, at least for the shown embodiment, the first and the second substantially plane area 104, 106 are arranged in a manner so as to necessitate reflection of ultrasound within the housing in order to send and/or receive ultrasound between the two ultrasound transducers 118, 120.

In a part 305 of the housing 102 any cross-sections of the housing transverse to the flow direction shows an inside surface of the housing which is unchanged and uniform. The part 305 of the housing is the part between a first plane inside surface 310 of the first substantially plane area 104 and a second plane inside surface 312 of the second substantially plane area 106.

The material of the housing opposite the transducers 118, 120 can be referred to as a first and a second matching layer housing parts 306, 308, respectively. A material thickness of the matching layer housing parts 306, 308 is adjusted to a wavelength of the ultrasound transducer which is to be acoustically coupled to matching layer housing parts. Each of two ultrasound transducers 118, 120 are acoustically coupled to each of the two matching layer housing parts 306, 308 and the two matching layer housing parts 306, 308 are arranged so as to necessitate reflection of ultrasound within the housing 102 in order to send and/or receive ultrasound between the two ultrasound transducers. The reflection is in the shown example provided by reflectors 302, 304. Hereby, the measurement of fluid flow may follow from generating and receiving ultrasonic signals by each of the ultrasound transducers as described in the following. The ultrasonic signals are directed towards and reflected by ultrasound reflectors 506 within the housing. In a typical measurement of fluid flow, the ultrasonic signals are simultaneously emitted from the two ultrasound transducers. Signals propagating upstream propagate faster than signals propagating downstream, and the flow rate can as an example be determined by measuring difference in arrival time of the emitted signals at the other transducer. The determination of the flow rate, as well as outputting the flow rate may be done by an analogue or digital unit electrically connected to the transducers.

FIG. 4 shows a view of cross-section B-B as indicated in FIG. 1. In the figure a cross-section in the middle of the housing 102 can be seen as well as the flange end 126 of the housing, the reflector 302, the reflector holding means 310 and the transducer 118 acoustically coupled to the first substantially plane area 104 (of which only an end part can be seen).

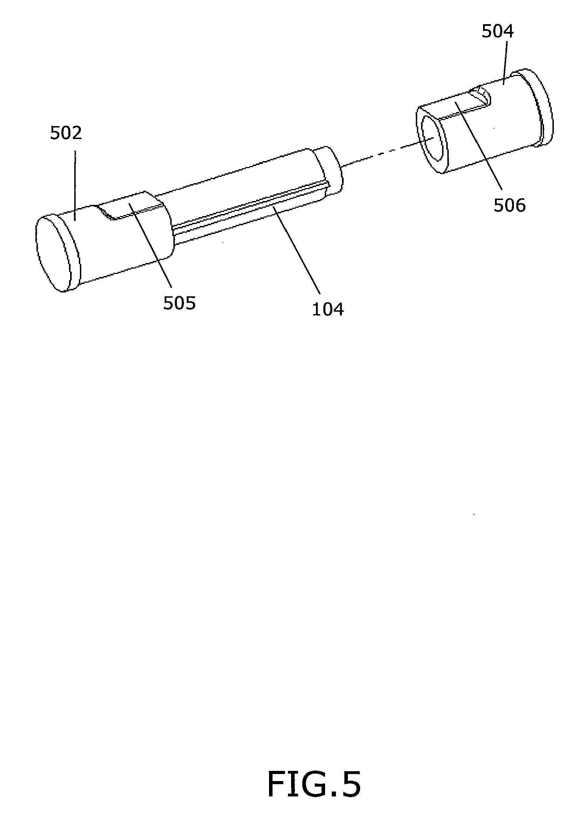

FIG. 5 shows two substantially solid inner form injection moulding tools 502, 504. Herein substantially solid means that the inner form tool may be provided with cooling channels or the alike but that it does not comprise any linkage or the alike for providing parts of the tool or connected to parts of the tool which can be moved in and out of the surface of an inner form tool body. It can be seen that the inner form tools are dimensioned so as to provide the inner surface 202 (not shown in this figure) of the housing. The first inner form tool 502 is provided with a first plane tool part 505 for forming the first plane inside surface 310 of the first substantially plane area 104 of the housing. The second inner form tool 504 is provided with a second plane tool part 506 for forming the second plane inside surface 312 of the second substantially plane area 104. Furthermore it can be seen that the first inner form tool 502 is provided with a protrusion 508 for forming a groove inside the housing for holding the reflectors via the reflector holding means.

The housing 102 can be provided by the described two inner form tools 502, 504 and by surrounding the inner form tools by outer form injection moulding tools adapted to form an outer surface of the housing, and by moulding the housing in one or more synthetic materials injected between the one or more inner form tools and the outer form tools.

Although the present invention has been described in connection with preferred embodiments, it is not intended to be limited to the specific form set forth herein. Rather, the scope of the present invention is limited only by the accompanying claims.

In this section, certain specific details of the disclosed embodiment are set forth for purposes of explanation rather than limitation, so as to provide a clear and thorough understanding of the present invention. However, it should be understood readily by those skilled in this art, that the present invention may be practised in other embodiments which do not conform exactly to the details set forth herein, without departing significantly from the spirit and scope of this disclosure. Further, in this context, and for the purposes of brevity and clarity, detailed descriptions of well-known apparatus, circuits and methodology have been omitted so as to avoid unnecessary detail and possible confusion.

In the claims, the term "comprising" does not exclude the presence of other elements or steps. Additionally, although individual features may be included in different claims, these may possibly be advantageously combined, and the inclusion in different claims does not imply that a combination of features is not feasible and/or advantageous. In addition, singular references do not exclude a plurality. Thus, references to "a", "an", "first", "second" etc. do not preclude a plurality. Reference signs are included in the claims however the inclusion of the reference signs is only for clarity reasons and should not be construed as limiting the scope of the claims.

In this document there is disclosed that in order to provide an improved method of manufacturing a housing of an ultrasonic fluid flow measurement device which is easily manufactured, assembled and installed there is, in accordance with an aspect of the present invention, disclosed a housing with a first substantially plane area 104 and a second substantially plane area 106 of the housing suited for acoustically coupling a first and a second ultrasound transducer, and a flow inlet centre axis 112 and a flow outlet centre axis 114 are provided in a flow direction of the housing on a common straight centre axis 116 of the monolithic and injection moulded housing 102 where a whole of the inside surface 202 of the housing 102 can be seen from the flow inlet 122 or from the flow outlet 124 or from the flow inlet 122 in combination with a view 206 from the flow outlet 124.

## Claims

1. Housing (102) of an ultrasonic flow measurement device for ultrasonic measurement of fluid flow, the housing comprising
- a first substantially plane area (104) and a second substantially plane area (106) of the housing suited for acoustically coupling a first and a second ultrasound transducer, and wherein
- a flow inlet centre axis (112) and a flow outlet centre axis (114) are provided in a flow direction of the housing on a common straight centre axis (116) of the housing (102),
- the housing (102) is provided in one monolithic piece and in one or more synthetic materials by injection moulding, and
- a whole of the inside surface (202) of the housing (102) can be seen from the flow inlet (122) or from the flow outlet (124) or from the flow inlet (122) in combination with a view (206) from the flow outlet (124).

2. Housing according to claim 1, wherein the first and the second substantially plane area are positioned so that a line (108) from a centre of the first substantially plane area to a centre of the second substantially plane area is substantially parallel with the flow direction (110).

3. Housing according to claim 1 or 2, wherein the first and the second substantially plane area (104, 106) are plane in a direction substantially parallel with the flow direction (110).

4. Housing according to any of the preceding claims, wherein the first and the second substantially plane area (104, 106) are arranged in a manner so as to necessitate reflection of ultrasound within the housing (102) in order to send and/or receive ultrasound between two ultrasound transducers (118, 120).

5. Housing according to any of the preceding claims, wherein any cross-sections of the housing (102) transverse to the flow direction (110) shows an inside surface (202) of the housing (102) which is unchanged and uniform at least for any cross-sections in a part (305) of the housing between a first plane inside surface (310) of the first substantially plane area (104) and a second plane inside surface (312) of the second substantially plane area (106).

6. Housing according to claim 5, wherein the inside surface (202) is unchanged and uniform also on an inside surface (310, 312) of the first substantially plane area (104) and the second substantially plane area (106).

7. Housing according to claim 6, wherein the inside surface (202) is unchanged and uniform in the complete length of the housing (102).

8. An ultrasonic fluid flow measurement device comprising a housing (102) according to any of the preceding claims 1-7 and further comprising two ultrasound transducers (118, 120), each acoustically coupled to a first substantially plane area (104) and a second substantially plane area (106) of the housing (102), respectively.

9. An ultrasonic fluid flow measurement device according to claim 8, further comprising two ultrasound reflectors (302, 304) arranged within the housing (102) to reflect ultrasound emitted by the ultrasound transducers (118, 120).

10. A method of manufacturing a housing (102) of an ultrasonic fluid flow measurement device, the device comprising
- a first substantially plane area (104) and a second substantially plane area (106) of the housing (102) suited for acoustically coupling a first and a second ultrasound transducer (118, 120),
- the first and the second substantially plane area (104, 106) being positioned so that a line (108) from a centre of the first substantially plane area to a centre of the second substantially plane area is substantially parallel with a flow direction (110), and
- a flow inlet centre axis (112) and a flow outlet centre axis (114) are provided in a flow direction (110) of the housing (102) on a common straight centre axis (116) of the housing,
- the housing (102) is provided in one monolithic piece and in one or more synthetic materials, and said method comprises
- providing one or more substantially solid inner form injection moulding tools (502, 504),
- surrounding the one or more inner form tools by outer form injection moulding tools adapted to form an outer surface of the housing (102),
- the one or more substantially solid inner form injection moulding tools (502, 504) and the outer form injection moulding tools being provided with dimensions so that a whole of the inside surface (202) of the housing can be seen from a flow inlet (122) or from a flow outlet (124) of the housing (102) or from the flow inlet (122) in combination with a view (206) from the flow outlet (124) of the housing,
- moulding the housing (102) in one or more synthetic materials injected between the one or more inner form tools (502, 504) and the outer form tools.

11. A method of manufacturing a housing of an ultrasonic fluid flow measurement device according to claim 10 comprising only one single substantially solid inner form injection moulding tool and providing the single substantially solid inner form injection moulding tool and the outer form injection moulding tools with dimensions so that the whole of the inside surface (202) of the housing (102) can be seen from the flow inlet (122) or from the flow outlet (124) of the housing.
